# NEUE EUROPÄISCHE PATENTSCHRIFT

(11) **EP 2 913 906 B2**
(45) Veröffentlichungstag und Bekanntmachung des Hinweises auf die Entscheidung über den Einspruch: **31.08.2022**
(45) Hinweis auf die Patenterteilung: 13.02.2019
(21) Anmeldenummer: 15156846.6
(22) Anmeldetag: 27.02.2015
(51) Int. Cl.: H02J 13/00, H04L 12/28

(54) **Verfahren und System zur Fernsteuerung und/oder Fernüberwachung des Betriebs eines Haushaltsgeräts mit Hilfe eines Kommunikationsgeräts**
Method and system for remote control and/or remote monitoring of the operation of a household appliance with the aid of a communication device
Procédé et système destinés à la télécommande et/ou à la télésurveillance du fonctionnement d'un appareil ménager à l'aide d'un appareil de communication

(30) Priorität: 27.02.2014 DE 102014203582
(43) Veröffentlichungstag der Anmeldung: 02.09.2015
(73) Patentinhaber: BSH Hausgeräte GmbH, 81739 München (DE)
(72) Erfinder: Häpp, Claudia, 80639 München (DE); Kober, Christoph, 83624 Otterfing (DE); Linder, Markus, 82362 Weilheim (DE); Pietsch, Ingo, 81829 München (DE)

(56) Entgegenhaltungen:
- DE-A1-102012 200 714
- DE-A1-102012 210 848
- US-A1- 2002 049 806
- US-A1- 2008 263 045
- US-A1- 2009 064 314
- US-A1- 2012 331 156

## Beschreibung

Die Erfindung betrifft ein Verfahren zur Fernsteuerung und/oder Fernüberwachung des Betriebs eines Haushaltsgeräts mit Hilfe eines Kommunikationsgeräts eines Benutzers, wobei das Haushaltsgerät an ein lokales Heimnetzwerk angebunden ist und das Kommunikationsgerät mit einem Internetserver kommuniziert, auf welchem ein Benutzerkonto des Benutzers geführt wird, auf welchem Daten bezüglich des Haushaltsgeräts abgelegt sind und auf welchem das Haushaltsgerät somit registriert ist, und wobei die Fernsteuerung und/oder Fernüberwachung des Haushaltsgeräts durch das Kommunikationsgerät unter Zugriff auf die Daten des Benutzerkontos und unter Vermittlung des lokalen Heimnetzwerks erfolgt. Die Erfindung betrifft außerdem ein System, welches zum Durchführen eines solchen Verfahrens ausgebildet ist.

Es ist bereits Stand der Technik, ein Haushaltsgerät mit einem Kommunikationsmodul auszustatten, über welches das Haushaltsgerät an ein lokales Heimnetzwerk und beispielsweise über einen Router des Heimnetzwerks an das Internet kommunikationstechnisch angebunden werden kann. Der Benutzer des Haushaltsgeräts hat dann die Möglichkeit, mit Hilfe eines entsprechenden Kommunikationsgeräts - beispielsweise eines mobilen Endgeräts, wie zum Beispiel eines Mobiltelefons oder eines Tablet-PCs - unter Vermittlung des lokalen Heimnetzwerks den Betrieb des Haushaltsgeräts zu steuern bzw. zu überwachen. Die Fernsteuerung und/oder Fernüberwachung erfolgt dabei unter Zugriff auf Daten, welche auf einem Internetserver zu einem persönlichen Benutzerkonto des Benutzers abgelegt sind. Es wird also vorausgesetzt, dass auf dem Internetserver ein entsprechendes Benutzerkonto angelegt ist. Diesem Benutzerkonto können auch mehrere Haushaltsgeräte zugeordnet werden, welche an dasselbe Heimnetzwerk angebunden sind und welche somit von dem Benutzerkonto aus ferngesteuert und/oder fernüberwacht werden können. Der Zugriff auf die Daten des Benutzerkontos setzt üblicherweise voraus, dass der Benutzer seinen Benutzernamen (Identifikator bzw. Kennung) und in der Regel auch ein persönliches Passwort eingeben und sich somit authentifizieren muss. Diese Kennungsdaten des Benutzers können bekanntlich an einem PC oder einem tragbaren Endgerät als Kommunikationsgerät eingegeben werden. Um den Zugriff auf das Benutzerkonto zu ermöglichen, kann auf dem tragbaren Endgerät beispielsweise eine entsprechende Applikation (Computerprogramm) installiert und durch den Benutzer aktiviert werden. Diese Applikation ermöglicht dann die Fernsteuerung und/oder Fernüberwachung des Haushaltsgeräts.

Eine Datenkommunikation zwischen Haushaltsgeräten einerseits und einem Internetserver bzw. einem tragbaren Kommunikationsendgerät andererseits wird beispielsweise durch das System "Home Connect" ermöglicht, welches von dem Hause der Anmelderin angeboten wird.

Die Fernsteuerung von Haushaltsgeräten mit Hilfe eines tragbaren Kommunikationsendgeräts ist bereits beispielsweise in den Dokumenten WO 01/28068 A1 und US 2012/331156 A1 beschrieben.

Es ist Aufgabe der Erfindung, die Fernsteuerung und/oder Fernüberwachung von Haushaltsgeräten im Vergleich zum Stand der Technik zu verbessern.

Diese Aufgabe wird erfindungsgemäß durch ein Verfahren sowie durch ein System mit den Merkmalen gemäß den jeweiligen unabhängigen Patentansprüchen gelöst.

Vorteilhafte Ausführungen der Erfindung sind Gegenstand der abhängigen

Patentansprüche, der Beschreibung und der Figuren.

Ein erfindungsgemäßes Verfahren dient zur Fernsteuerung und/oder Fernüberwachung des Betriebs eines Haushaltsgeräts mittels eines Kommunikationsgeräts eines Benutzers. Das Haushaltsgerät ist an ein lokales Heimnetzwerk angebunden, beispielsweise an einen Router, insbesondere einen WLAN-Router. Das Kommunikationsgerät kommuniziert mit einem Internetserver, auf welchem ein Benutzerkonto des Benutzers geführt wird, auf welchem Daten bezüglich des Haushaltsgeräts abgelegt sind und auf welchem somit das Haushaltsgerät registriert ist. Durch diese Registrierung ist das Haushaltsgerät dem Benutzerkonto zugeordnet. Die Fernsteuerung und/oder Fernüberwachung des Haushaltsgeräts erfolgt durch das Kommunikationsgerät unter Zugriff auf die Daten des Benutzerkontos sowie unter Vermittlung des lokalen Heimnetzwerks. Erfindungsgemäß ist vorgesehen, dass auf dem Internetserver ein von dem einen Benutzerkonto separates weiteres Benutzerkonto eines anderen Benutzers geführt wird, wobei sowohl auf dem einen als auch auf dem weiteren Benutzerkonto Daten bezüglich ein und desselben Haushaltsgeräts abgelegt werden und die Fernsteuerung und/oder Fernüberwachung dieses Haushaltsgeräts wahlweise unter Zugriff auf das eine oder das weitere Benutzerkonto durchgeführt wird.

Erfindungsgemäß wird somit ermöglicht, dass ein und dasselbe Haushaltsgerät auf zumindest zwei voneinander separaten Benutzerkonten auf dem Internetserver registriert und somit von diesen beiden Benutzerkonten aus gesteuert und/oder überwacht werden kann. Dieser "Mutli-User"-Zugriff hat den Vorteil, dass mehrere Benutzer sich mit ihren individuellen Kennungsdaten (Benutzername, E-Mail Adresse, Passwort und dergleichen) registrieren und auf das selbe Haushaltsgerät zugreifen können. Die Erfindung basiert dabei auf der Erkenntnis, dass sich mehrere Benutzer - beispielsweise innerhalb einer Familie - im Stand der Technik ein einziges Benutzerkonto bzw. einen einzigen Nutzerzugang teilen müssten, um auf ein bestimmtes Haushaltsgerät zugreifen zu können. Die Erfindung schafft hier eine Abhilfe, indem ein und dasselbe Haushaltsgerät von verschiedenen Benutzerkonten aus ferngesteuert und/oder fernüberwacht werden kann.

Unter einem Haushaltsgerät wird vorliegend insbesondere ein Gerät verstanden, welches zur Haushaltsführung eingesetzt wird. Dies kann insbesondere ein Haushaltsgroßgerät sein, wie beispielsweise ein Gerät zur Pflege von Wäschestücken, ein Haushaltsgerät zur Zubereitung von Lebensmitteln, beispielsweise ein Gargerät, wie zum Beispiel ein Backofen oder ein Herd, ein Haushaltsgerät zum Lagern und Konservieren von Lebensmitteln, wie ein Haushaltskältegerät, beispielsweise ein Kühlgerät oder ein Gefriergerät oder eine Kühl-Gefrierkombination, ein Klimagerät oder eine Geschirrspülmaschine. Ein Gerät zur Pflege von Wäschestücken kann dabei eine Waschmaschine, ein Wäschetrockner oder ein Waschtrockner sein. Das Haushaltsgerät kann aber auch ein Haushaltskleingerät sein, wie beispielsweise ein Kaffeevollautomat oder eine Küchenmaschine.

Vorzugsweise wird als Kommunikationsgerät ein tragbares bzw. mobiles Kommunikationsendgerät verwendet, insbesondere ein Mobiltelefon (Smartphone) oder aber ein Tablet-PC. Die Fernsteuerung und/oder Fernüberwachung erfolgt somit mit Hilfe eines mobilen Endgeräts. Diese Ausführungsform macht sich die Tatsache zu nutze, dass heutzutage nahezu jeder über ein Mobiltelefon oder aber einen Tablet-PC verfügt, auf welchem sogenannte Applikationen (Computerprogramme) installiert und ausgeführt werden können. Eine entsprechende Applikation kann für die Fernsteuerung und/oder Fernüberwachung der Haushaltsgeräte bereitgestellt werden.

Es kann vorgesehen sein, dass die Daten bezüglich des Haushaltsgeräts zunächst auf dem einen Benutzerkonto abgelegt werden und dieses Haushaltsgerät somit zunächst auf dem einen Benutzerkonto registriert wird. Das Ablegen der Daten auf dem weiteren Benutzerkonto bzw. die Registrierung dieses Haushaltsgeräts auf dem weiteren Benutzerkonto kann nur unter der Voraussetzung erfolgen, dass der Internetserver eine Zustimmungsnachricht des Benutzers des einen Benutzerkontos empfängt, welche unter Zugriff auf das eine Benutzerkonto generiert wird. Es wird also unterschieden, ob sich bereits ein Benutzer für ein bestimmtes Haushaltsgerät mit einer entsprechenden Applikation registriert hat oder nicht. Ist dies nicht der Fall, wird diesem ersten Benutzer die Möglichkeit bereitgestellt, die Registrierung desselben Haushaltsgeräts auf anderen Benutzerkonten zuzulassen oder abzulehnen. Insgesamt kann ein und dasselbe Haushaltsgerät auch auf beliebig vielen Benutzerkonten registriert werden; jedoch kann pro Haushaltsgerät bevorzugt lediglich ein einziger "erster Benutzer" definiert werden, welcher die Registrierung des Haushaltsgeräts auf anderen Benutzerkonten zulassen oder ablehnen kann. Dieser erste Benutzer kann die Registrierung des Haushaltsgeräts auf anderen Benutzerkonten gegebenenfalls auch löschen.

Im Allgemeinen kann vorgesehen sein, dass der erste Benutzer, auf dessen Benutzerkonto die Daten zuerst abgelegt wurden bzw. auf dessen Benutzerkonto das Haushaltsgerät zuerst registriert wurde, von seinem Benutzerkonto aus eine bereits erfolgte Registrierung dieses Haushaltsgeräts auf einem anderen Benutzerkonto verwalten und somit beispielsweise überwachen und kontrollieren kann.

Erfindungsgemäß werden auf dem einen und/oder dem weiteren Benutzerkonto zusätzliche Daten bezüglich eines weiteren Haushaltsgeräts abgelegt, welches an ein von dem einen Heimnetzwerk separates weiteres Heimnetzwerk angeschlossen ist. Die Fernsteuerung und/oder Fernüberwachung des Betriebs des weiteren Haushaltsgeräts erfolgt dann auch unter Zugriff auf die Daten desselben Benutzerkontos. Dies bedeutet, dass auf demselben Benutzerkonto des Benutzers auch dieses weitere Haushaltsgerät registriert wird, welches an einem ganz anderen Ort als das eine Haushaltsgerät aufgestellt ist. Die Fernsteuerung und/oder Fernüberwachung des Betriebs des weiteren Haushaltsgeräts erfolgt ebenfalls unter Zugriff auf die Daten desselben Benutzerkontos. Es wird demnach ermöglicht, dass von ein und demselben Benutzerkonto aus, welches auf dem Internetserver geführt wird, mehrere Haushaltsgeräte ferngesteuert und/oder fernüberwacht werden können, welche an unterschiedlichen Orten bzw. in unterschiedlichen Haushalten angeordnet und somit an verschiedene lokale Heimnetzwerke bzw. an verschiedene Router kommunikationstechnisch angeschlossen sind. Ein derartiger "Multi-Aplliance"-Zugriff basiert auf der Erkenntnis, dass im Stand der Technik mehrere gleiche Applikationen auf einem tragbaren bzw. mobilen Endgerät installiert werden müssen, um mehrere Haushaltsgeräte zu steuern und/oder zu überwachen, welche an verschiedenen Standorten stehen. Da jedoch durch die Restriktionen der mobilen Betriebssysteme lediglich eine einzige Instanz einer bestimmten Applikation pro Gerät installiert werden kann, müssten im Stand der Technik mehrere mobile Geräte genutzt werden, um mehrere Haushaltsgeräte, welche an verschiedenen Standorten stehen, fernsteuern und/oder fernüberwachen zu können. Alternativ müsste sich der Benutzer im Stand der Technik bei der Applikation abmelden, um sich dann wieder mit einer zweiten Kennung anzumelden und so zwischen den diversen Orten der Haushaltsgeräte zu wechseln. Dieses Problem wird vorliegend dadurch gelöst, dass durch den Internetserver und insbesondere auch eine entsprechende Applikation auf dem Kommunikationsgerät zugelassen wird, dass auf ein und demselben Benutzerkonto mehrere Haushaltsgeräte von unterschiedlichen Standorten registriert und diese Haushaltsgeräte somit von diesem Benutzerkonto aus ferngesteuert und/oder fernüberwacht werden können. Für einen Benutzer, der beispielsweise eine Zweitwohnung hat, erübrigt sich somit der Einsatz von weiteren Kommunikationsgeräten mit den damit verbundenen Nachteilen.

Es erweist sich als besonders vorteilhaft, wenn bei der Fernsteuerung und/oder Fernüberwachung durch das Kommunikationsgerät überprüft wird, ob das Kommunikationsgerät ein Netzwerksignal eines Routers des Heimnetzwerks empfängt und sich somit in der Reichweite des Heimnetzwerks befindet oder nicht. Befindet sich das Kommunikationsgerät innerhalb der Reichweite des Heimnetzwerks, kann die Fernsteuerung und/oder Fernüberwachung direkt und somit alleine über das Heimnetzwerk durchgeführt werden. Dies bedeutet, dass entsprechende Steuersignale von dem Kommunikationsgerät über das Heimnetzwerk an das Haushaltsgerät und/oder entsprechende Zustandssignale von dem Haushaltsgerät über das Heimnetzwerk an das Kommunikationsgerät übermittelt werden. Befindet sich das Kommunikationsgerät jedoch außerhalb der Reichweite des Heimnetzwerks, so kann die Fernsteuerung und/oder Fernüberwachung unter Vermittlung des Internetservers über das Internet durchgeführt werden. Hierzu wird die Internetverbindung des Kommunikationsgeräts - wie beispielsweise eine Mobilfunkverbindung und/oder ein anderes WLAN-Netzwerk - genutzt.

Vorzugsweise bleibt ein Benutzerkonto eines Benutzers auch nach dem Beenden einer durchgeführten Fernsteuerung und/oder Fernüberwachung eines Haushaltsgeräts mit dem Kommunikationsgerät auf dem Internetserver abgelegt. Dadurch wird eine einfache Verwaltung der Informationen und ein schneller, auch zukünftiger Zugriff ermöglicht.

Vorzugsweise wird bei einer zukünftigen weiteren gewollten Fernsteuerung und/oder Fernüberwachung eines Haushaltsgeräts mit dem Kommunikationsgerät durch einen Benutzer eine Berechtigungsprüfung des Benutzers anhand des bereits abgelegten Benutzerprofils durchgeführt. Dadurch kann eine schnelle und sichere Fernsteuerung und/oder Fernüberwachung erreicht werden. Ein Missbrauch eines Haushaltsgeräts durch einen Benutzer ist dadurch dauerhaft verhindert. Besonders vorteilhaft führt dies auch dazu, dass die Informationen des Benutzerprofils nicht auf dem Kommunikationsgerät gespeichert werden müssen, so dass der dortige Speicher für andere Daten genutzt werden kann. Ferner ist die Berechtigungsprüfung dann auch auf dem Internetserver durchführbar, insbesondere da dieser vorzugsweise eine größere und/oder schnellere Recheneinheit aufweist, als das Kommunikationsgerät. Die Berechtigungsprüfung kann dadurch auch sehr schnell erfolgen.

Die Erfindung betrifft außerdem ein System mit den Merkmalen von Anspruch 6 zur Fernsteuerung und/oder Fernüberwachung des Betriebs eines ein lokales Heimnetzwerk angebundenen Haushaltsgeräts.

Die mit Bezug auf das erfindungsgemäße Verfahren vorgestellten bevorzugten Ausführungsformen und deren Vorteile gelten entsprechend für das erfindungsgemäße System.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein System gemäß einer Ausführungsform der Erfindung;
- Fig. 2: ein Flussdiagramm eines Verfahrens gemäß einer Ausführungsform der Erfindung; und
- Fig. 3: ein Flussdiagramm eines Verfahrens gemäß einer Ausführungsform der Erfindung.

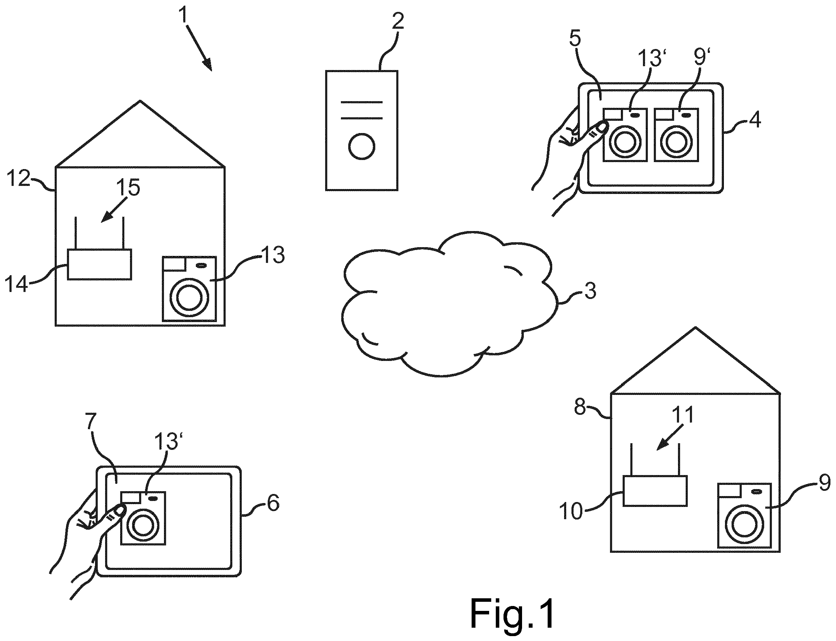

Ein in Fig. 1 dargestelltes System 1 umfasst einen Internetserver 2, welcher an das Internet 3 angebunden ist. Auf dem Internetserver 2 werden eine Vielzahl von Benutzerkonten geführt, welche jeweils zur Fernsteuerung und/oder Fernüberwachung des Betriebs von Haushaltsgeräten dienen. Durch diese Benutzerkonten können auch weitere Funktionalitäten um das Thema "Haushaltsgeräte" bereitgestellt werden, wie zum Beispiel Hilfe im Fehlfunktionsfall, Hilfe zur Benutzung der Haushaltsgeräte und dergleichen.

Zum System 1 gehört außerdem ein Kommunikationsgerät 4 (erstes Kommunikationsgerät), welches im Ausführungsbeispiel als ein tragbares bzw. mobiles Kommunikationsendgerät ausgebildet ist, etwa ein Mobiltelefon oder ein Tablet-PC. Das Kommunikationsgerät 4 weist ein Display 5 auf, auf welchem eine graphische Benutzeroberfläche erzeugt werden kann. Diese kann beispielsweise durch eine entsprechende Applikation bereitgestellt werden, welche auf dem Kommunikationsgerät 4 installiert wird. Das Display 5 kann beispielsweise ein Touchscreen mit einer berührungsempfindlichen Oberfläche sein. Auch das Kommunikationsgerät 4 weist Kommunikationsmittel zur Anbindung an das Internet 3 auf, etwa über ein Mobilfunknetz und/oder ein WLAN-Netz. Das Kommunikationsgerät 4 kann somit mit dem Internetserver 2 kommunizieren.

Während das erste Kommunikationsgerät 4 einem ersten Benutzer gehört, gehört ein weiteres (zweites) Kommunikationsgerät 6 einem zweiten Benutzer. Auch dieses zweite Kommunikationsgerät 6 ist im Ausführungsbeispiel als ein tragbares Kommunikationsendgerät ausgebildet, wie insbesondere ein Mobiltelefon oder ein Tablet-PC. Das zweite Kommunikationsgerät 6 weist ein Display 7 auf, auf welchem in entsprechender Weise eine graphische Benutzeroberfläche erzeugt werden kann, die durch eine entsprechende Applikation bereitgestellt wird, die auf dem Kommunikationsgerät 6 installiert und ausgeführt wird. Das Display 7 kann ebenfalls ein Touchscreen mit einer berührungsempfindlichen Oberfläche sein. Auch das Kommunikationsgerät 6 ist an das Internet 3 angebunden, etwa über ein Mobilfunknetz und/oder ein WLAN-Netz. Das Kommunikationsgerät 6 kann somit mit dem Internetserver 2 kommunizieren.

In einem Haushalt 8 des ersten Benutzers können sich insgesamt eine Vielzahl von Haushaltsgeräten befinden, von denen in Fig. 1 lediglich ein Haushaltsgerät 9 repräsentativ dargestellt ist. Kommunikationstechnisch ist das Haushaltsgerät 9 an einen WLAN-Router 10 und somit an ein erstes Heimnetzwerk 11 angeschlossen. Über den WLAN-Router 10 ist das Haushaltsgerät 9 an das Internet 3 angebunden.

In einem davon separaten Haushalt 12 des zweiten Benutzers - und somit an einem anderen Ort - können sich ebenfalls eine Vielzahl von Haushaltsgeräten befinden, von denen in Fig. 1 lediglich ein Haushaltsgerät 13 repräsentativ dargestellt ist. In dem zweiten Haushalt 12 ist ein WLAN-Router 14 und somit eine zweites Heimnetzwerk 15 bereitgestellt, an welchem bzw. an welches das Haushaltsgerät 13 kommunikationstechnisch angebunden ist. Über den WLAN-Router 14 ist das Haushaltsgerät 13 auch an das Internet 3 angebunden.

Zur Kommunikation mit dem jeweiligen Heimnetzwerk 11 bzw. 15 können die Haushaltsgeräte 9, 13 über entsprechende Kommunikationsmodule verfügen, welche zur drahtlosen Kommunikation mit dem jeweiligen WLAN-Router 10 bzw. 14 ausgebildet sind. Alternativ kann auch eine drahtgebundene Datenkommunikation vorgesehen sein.

Sowohl für den ersten Benutzer als auch für den zweiten Benutzer sind auf dem Internetserver 2 jeweilige, voneinander separat geführte Benutzerkonten bereitgestellt. Der erste Benutzer kann mittels seines Kommunikationsgeräts 4 auf sein Benutzerkonto auf dem Internetserver 2 zugreifen und über dieses Benutzerkonto den Betrieb des Haushaltsgeräts 9 steuern und/oder überwachen. Zu diesem Zwecke kann das Haushaltsgerät 9 auf dem Benutzerkonto des ersten Benutzers registriert werden, so dass auf dem Internetserver 2 Daten bezüglich des Haushaltsgeräts 9 abgelegt werden, die die Fernsteuerung und/oder Fernüberwachung ermöglichen. Damit der Benutzer auf sein Benutzerkonto auf dem Internetserver 2 zugreifen kann, ist zunächst eine Authentifizierung des Benutzers auf dem Internetserver 2 erforderlich. Dazu braucht der Benutzer beispielsweise einen entsprechenden Benutzernamen sowie ein Passwort.

Entsprechend kann auch der zweite Benutzer mit Hilfe seines Kommunikationsgeräts 6 auf sein Benutzerkonto auf dem Internetserver 2 zugreifen und über dieses Benutzerkonto den Betrieb des Haushaltsgeräts 3 steuern und/oder überwachen. Auch hier ist eine entsprechende Registrierung des Haushaltsgeräts 3 auf dem Benutzerkonto des zweiten Benutzers erforderlich, wie auch eine Authentifizierung des zweiten Benutzers mit Hilfe entsprechender Zugangsdaten.

Durch entsprechende Ausgestaltung des Internetservers 2 sowie der Applikationen auf den Kommunikationsgeräten 4, 6 wird ermöglicht, dass von ein und demselben Benutzerkonto aus und somit mit Hilfe ein und derselben Applikation nicht nur Haushaltsgeräte eines bestimmten Haushalts bzw. eines bestimmten Heimnetzwerks, sondern auch Haushaltsgeräte gesteuert und/oder überwacht werden können, die an einem anderen Ort stehen und somit an ein anderes Heimnetzwerk angeschlossen sind. So kann beispielsweise der erste Benutzer unter Verwendung seines Kommunikationsgeräts 4 sowie unter Zugriff auf die Daten seines Benutzerkontos nicht nur das Haushaltsgerät 9, sondern darüber hinaus auch das Haushaltsgerät 13 steuern und/oder überwachen, welches in dem zweiten Haushalt 12 aufgestellt ist. Dazu kann das Haushaltsgerät 13 auf dem Benutzerkonto des ersten Benutzers registriert werden, so dass auf diesem Benutzerkonto Zugriffsdaten bezüglich dieses Haushaltsgeräts 13 abgelegt werden können. Die auf dem Kommunikationsgerät 4 bereitgestellte Applikation kann entsprechend so implementiert werden, so dass durch die bereitgestellte graphische Benutzeroberfläche die Fernsteuerung und/oder Fernüberwachung der Haushaltsgeräte 9, 13 ermöglicht wird, was in Fig. 1 mit 9' und 13' schematisch veranschaulicht ist.

Der Betrieb des Haushaltsgeräts 13 kann folglich von zwei voneinander separaten Benutzerkonten aus ferngesteuert und/oder fernüberwacht werden. Die Zugriffsdaten des Haushaltsgeräts 13 sind nämlich sowohl auf dem ersten als auch auf dem zweiten Benutzerkonto abgelegt, so dass die Fernsteuerung und/oder Fernüberwachung des Haushaltsgeräts 13 wahlweise unter Zugriff auf das erste und/oder das zweite Benutzerkonto durchgeführt wird. In diesem Zusammenhang kann vorgesehen sein, dass bezüglich des Haushaltsgeräts 13 der Benutzer des zweiten Kommunikationsgeräts 16 ein "Super User" bzw. ein Master-Benutzer ist, welcher das Haushaltsgerät 13 zuerst auf seinem Benutzerkonto registriert hat. Dieser Master-Benutzer kann dann selbst entscheiden, ob das Haushaltsgerät 13 auf dem anderen Benutzerkonto registriert werden darf oder nicht. Damit das Haushaltsgerät 13 also auch auf dem Benutzerkonto des Benutzers des ersten Kommunikationsgeräts 4 registriert werden kann, wird vorausgesetzt, dass der Internetserver 2 eine entsprechende Zustimmungsnachricht von dem Benutzer des zweiten Kommunikationsgeräts 6 empfängt, welche beispielsweise unter Zugriff auf sein Benutzerkonto generiert wird.

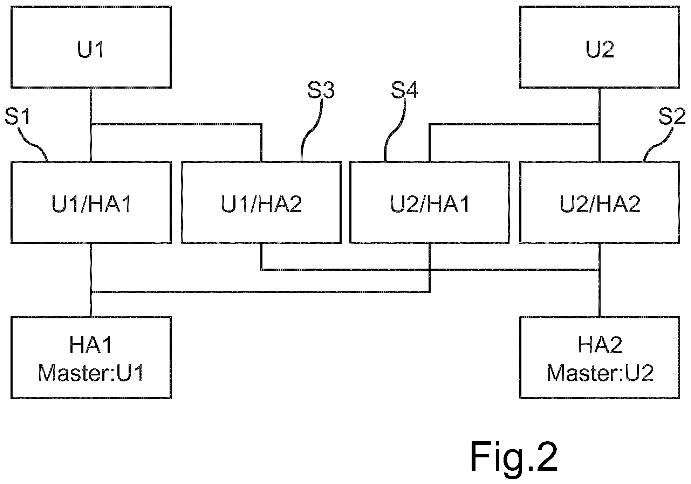

Eine solche Registrierung von Haushaltsgeräten bzw. Verknüpfung von Haushaltsgeräten mit den Benutzerkonten wird nachfolgend unter Bezugnahme auf Fig. 2 erläutert: In Fig. 2 bezeichnen U1 einen ersten Benutzer mit einem ersten Kommunikationsgerät 4, U2 einen zweiten Benutzer mit einem entsprechenden zweiten Kommunikationsgerät 6, HA1 ein erstes Haushaltsgerät 9, welches an ein erstes Heimnetzwerk 11 angebunden ist, sowie HA2 ein zweites Haushaltsgerät 13, welches an ein zweites Heimnetzwerk 15 angebunden ist. Gemäß Schritt S1 wird zunächst das Haushaltsgerät HA1 auf dem Benutzerkonto des ersten Benutzers U1 registriert, so dass bezüglich des ersten Haushaltsgeräts HA1 der erste Benutzer U1 ein "Super User" bzw. ein Master-Benutzer ist. Gemäß Schritt S2 wird das Haushaltsgerät HA2 erstmals registriert, und zwar auf dem Benutzerkonto des zweiten Benutzers U2. Bezüglich des zweiten Haushaltsgeräts HA2 stellt also der zweite Benutzer U2 den Master-Benutzer dar.

Gemäß Schritt S3 kann nun das Haushaltsgerät HA2 auch zum Benutzerkonto des ersten Benutzers U1 registriert werden, um den Zugriff auch von diesem Benutzerkonto aus zu ermöglichen. Diese Registrierung erfolgt jedoch nur unter der Voraussetzung, dass der Master-Benutzer U2 dies erlaubt. Erteilt der Master-Benutzer U2 seine Zustimmung, kann dann auch der erste Benutzer U1 von seinem Benutzerkonto aus auf das zweite Haushaltsgerät HA2 zugreifen, ohne dass eine weitere, explizite Zustimmung des Master-Benutzers U2 nötig ist. Der Master-Benutzer U2 hat jedoch jederzeit die Möglichkeit, die Registrierung des zweiten Haushaltsgeräts HA2 auf dem Benutzerkonto des ersten Benutzers U1 zu löschen.

Entsprechend kann gemäß Schritt S4 auch das erste Haushaltsgerät HA1 zum Benutzerkonto des zweiten Benutzers U2 registriert werden, wenn der Master-Benutzer U1 dem zustimmt.

Sowohl die Applikation auf dem jeweiligen Kommunikationsgerät 4, 6 als auch das Kommunikationsmodul des jeweiligen Haushaltsgeräts 9, 13 sind also derart konzipiert, dass mehrere Nutzer dasselbe Haushaltsgerät 9, 13 mit unterschiedlichen Benutzerkonten registrieren können. Das vorgeschlagene Verfahren ist grundsätzlich für beliebig viele weitere Benutzer möglich, es kann jedoch pro Haushaltsgerät 9, 13 nur einen einzigen Master-Benutzer geben. Dieser hat im Vergleich zu anderen Benutzern mehr Rechte und kann beispielsweise die Registrierung anderer Benutzer in Bezug auf das jeweilige Haushaltsgerät 9, 13 löschen.

Die Applikation auf dem Kommunikationsgerät 4, 6 wird beim Verknüpfen dieses Kommunikationsgeräts 4, 6 mit einem Haushaltsgerät 9, 13 in dem jeweiligen Heimnetzwerk 11, 15 konfiguriert und prägt die Benutzeroberfläche entsprechend aus. Befindet sich der Benutzer innerhalb der Reichweite des Heimnetzwerks 11, 15 kann durch Abfrage der jeweils am Internetserver 2 dem jeweiligen Benutzerkonto bekannten bzw. zugeordneten Haushaltsgeräte 9, 13 auch auf das jeweils andere Haushaltsgerät 9, 13 zugegriffen werden. Dies bedeutet, dass der Benutzer auch auf das Haushaltsgerät 13 zugreifen kann, wenn er sich in der Reichweite des Heimnetzwerks 11 gemäß Fig. 1 befindet. Auf die Haushaltsgeräte 9, 13 kann aber auch außerhalb der WLAN-Netze zugegriffen werden. Hierzu wird die Internetverbindung des Kommunikationsgeräts 4, 6 genutzt, wie beispielsweise die Mobilfunkverbindung oder aber die Verbindung zu einem anderen WLAN-Netz. Die Applikation evaluiert für jedes Haushaltsgerät 9, 13, ob eine Verbindung zum Haushaltsgerät 9, 13 direkt über ein WLAN-Netz oder aber über das Internet genutzt wird. Falls keine lokale Verbindung über WLAN möglich ist, wird versucht, auf das Haushaltsgerät 9, 13 über die Mobilfunkverbindung zuzugreifen. Der Benutzer kann auf beide Haushaltsgeräte 9, 13 gleichzeitig zugreifen, sofern eine Internetverbindung besteht.

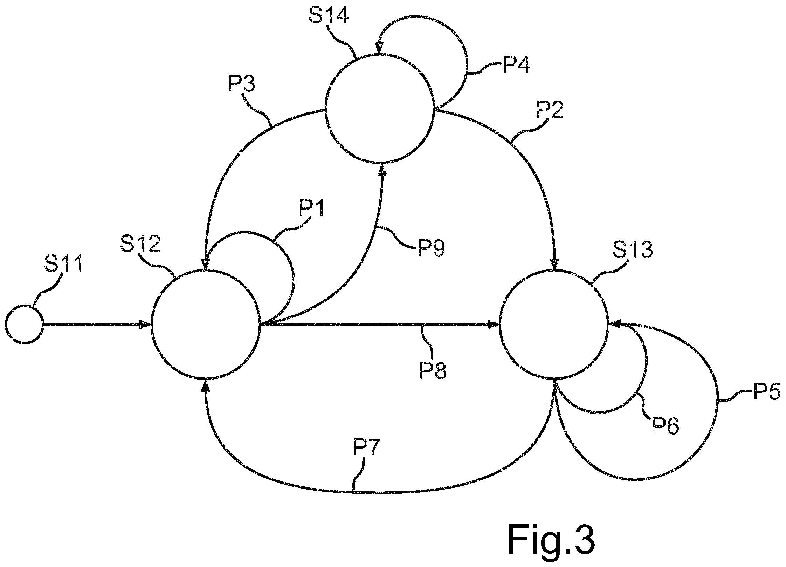

Ein derartiges Verfahren ist in Fig. 3 in form einer Zustandsmaschine abgebildet: Das Verfahren startet in einem ersten Schritt S11 und geht zu einem weiteren Schritt S12 über, in welchem das Kommunikationsgerät 4, 6 überprüft, ob eine Kommunikationsverbindung zu einem WLAN-Netz oder aber eine Mobilfunkverbindung bzw. eine andere Internetverbindung überhaupt möglich ist. Diese Überprüfung erfolgt fortlaufend, was in der Zustandsmaschine gemäß Fig. 3 mit einer Pfeildarstellung P1 veranschaulicht ist. Ist keine Kommunikationsverbindung möglich, so verbleibt das Verfahren im Schritt S12. Ausgehend von diesem Zustand gemäß S12 sind zwei Zustandsänderungen möglich: Ist eine WLAN-Verbindung und somit eine Datenverbindung mit einem Heimnetzwerk 11, 15 möglich, geht das Verfahren zu einem weiteren Schritt S13 über. Ist wiederum eine Mobilfunkverbindung möglich, geht das Verfahren zu einem Schritt S14 über.

Ausgehend von dem Zustand gemäß S14 geht das Verfahren dann sofort zum Schritt S13 über, wenn eine WLAN-Verbindung detektiert wird (Pfeildarstellung P2). Wird im Schritt S14 detektiert, dass keine Datenverbindung besteht, kehrt das Verfahren gemäß Pfeildarstellung P3 zum Schritt S12 zurück. Außerdem wird gemäß Pfeildarstellung P4 im Zustand gemäß S14 fortlaufend überprüft, ob die Internetverbindung zum Internetserver 2 möglich ist.

Gemäß Zustand S14 kommuniziert das Kommunikationsgerät 4, 6 also mit dem Internetserver 2, so dass die Fernsteuerung und/oder Fernüberwachung unter Vermittlung des Internetservers 2 erfolgt. Gemäß Zustand S13 befindet sich das Kommunikationsgerät 4, 6 in der Reichweite eines Heimnetzwerks 11, 15, so dass die Fernsteuerung und/oder Fernüberwachung alleine über das lokale Heimnetzwerk 11, 15 erfolgen kann. Die Kommunikation mit dem Internetserver 2 erfolgt hier über den jeweiligen Router 10 bzw. 14. Gemäß Zustand S13 werden beide Datenverbindungen fortlaufend überprüft, nämlich einerseits die WLAN-Verbindung zum Haushaltsgerät (P5) sowie andererseits die Internetverbindung über den Router 10, 14 zum Internetserver 2 (P6). Wird gemäß Zustand S13 detektiert, dass keine Verbindung besteht, kehrt das Verfahren gemäß Pfeildarstellung P7 zum Zustand S12 zurück. Von diesem Zustand aus kann das Verfahren wiederum zum Zustand S13 (P8) oder zum Zustand S14 (P9) wechseln.

Vorzugsweise bleibt ein Benutzerkonto eines Benutzers auch nach dem Beenden einer durchgeführten Fernsteuerung und/oder Fernüberwachung eines Haushaltsgeräts mit dem Kommunikationsgerät auf dem Internetserver abgelegt. Dadurch wird eine einfache Verwaltung der Informationen und ein schneller, auch zukünftiger Zugriff ermöglicht.

Vorzugsweise wird bei einer zukünftigen weiteren gewollten Fernsteuerung und/oder Fernüberwachung eines Haushaltsgeräts mit dem Kommunikationsgerät durch einen Benutzer eine Berechtigungsprüfung des Benutzers anhand des bereits abgelegten Benutzerprofils durchgeführt. Dadurch kann eine schnelle und sichere Fernsteuerung und/oder Fernüberwachung erreicht werden. Ein Missbrauch eines Haushaltsgeräts durch einen Benutzer ist dadurch dauerhaft verhindert. Besonders vorteilhaft führt dies auch dazu, dass die Informationen des Benutzerprofils nicht auf dem Kommunikationsgerät gespeichert werden müssen, so dass der dortige Speicher für andere Daten genutzt werden kann. Ferner ist die Berechtigungsprüfung dann auch auf dem Internetserver durchführbar, insbesondere da dieser vorzugsweise eine größere und/oder schnellere Recheneinheit aufweist, als das Kommunikationsgerät. Die Berechtigungsprüfung kann dadurch auch sehr schnell erfolgen.

### Bezugszeichenliste

- 1: System
- 2: Internetserver
- 3: Internet
- 4: erstes Kommunikationsgerät
- 5: Display
- 6: zweites Kommunikationsgerät
- 7: Display
- 8: Haushalt
- 9: Haushaltsgerät
- 10: WLAN-Router
- 11: erstes Heimnetzwerk
- 12: Haushalt
- 13: Haushaltsgerät
- 14: WLAN-Router
- 15: zweites Heimnetzwerk
- HA1: erstes Haushaltsgerät
- HA2: zweites Haushaltsgerät
- P1: Pfeildarstellung
- P2: Pfeildarstellung
- P3: Pfeildarstellung
- P4: Pfeildarstellung
- P5: Pfeildarstellung
- P6: Pfeildarstellung
- P7: Pfeildarstellung
- P8: Pfeildarstellung
- P9: Pfeildarstellung
- S1: Schritt/Zustand
- S2: Schritt/Zustand
- S3: Schritt/Zustand
- S4: Schritt/Zustand
- S11: Schritt/Zustand
- S12: Schritt/Zustand
- S13: Schritt/Zustand
- S14: Schritt/Zustand
- U1: erster Benutzer
- U2: zweiter Benutzer

## Patentansprüche

1. Verfahren zur Fernsteuerung und/oder Fernüberwachung des Betriebs eines Haushaltsgeräts (9, 13) mithilfe eines Kommunikationsgeräts (4, 6) eines Benutzers (U1, U2), wobei das Haushaltsgerät (9, 13) an ein lokales Heimnetzwerk (11, 15) angebunden ist und das Kommunikationsgerät (4, 6) mit einem Internetserver (2) kommuniziert, auf welchem ein erstes Benutzerkonto eines ersten Benutzers (U1) geführt wird, auf welchem Daten bezüglich des Haushaltsgeräts (9, 13) abgelegt sind, und wobei die Fernsteuerung und/oder Fernüberwachung des Haushaltsgeräts (9, 13) durch das Kommunikationsgerät (4, 6) unter Zugriff auf die Daten des ersten Benutzerkontos und unter Vermittlung des lokalen Heimnetzwerks (11, 15) erfolgt, wobei auf dem Internetserver (2) ein von dem ersten Benutzerkonto separates weiteres Benutzerkonto eines anderen Benutzers (U1, U2) geführt wird, wobei sowohl auf dem ersten als auch auf dem weiteren Benutzerkonto Daten bezüglich ein und desselben Haushaltsgeräts (9, 13) abgelegt werden, sodass die Fernsteuerung und/oder Fernüberwachung dieses Haushaltsgeräts (9, 13) wahlweise unter Zugriff auf das erste oder das weitere Benutzerkonto durchgeführt wird,
wobei die Daten bezüglich des Haushaltsgeräts (9, 13) zunächst auf dem ersten Benutzerkonto abgelegt werden und das Ablegen der Daten bezüglich dieses Haushaltsgeräts (9, 13) auf dem weiteren Benutzerkonto unter der Voraussetzung erfolgt, dass der Internetserver (2) eine Zustimmungsnachricht des ersten Benutzers (U1, U2) empfängt, welche unter Zugriff auf das erste Benutzerkonto generiert wird, wobei der erste Benutzer vom ersten Benutzerkonto aus eine Registrierung des Haushaltsgeräts auf dem weiteren Benutzerkonto verwalten und/oder löschen kann,
**dadurch gekennzeichnet, dass**
auf dem ersten und/oder dem weiteren Benutzerkonto zusätzlich Daten bezüglich eines weiteren Haushaltsgeräts (9, 13), welches an ein von dem einen Heimnetzwerk (11, 15) separates weiteres Heimnetzwerk (11, 15) angeschlossen ist, abgelegt werden, und dass die Fernsteuerung und/oder Fernüberwachung des Betriebs des weiteren Haushaltsgeräts (9, 13) auch unter Zugriff auf die Daten desselben Benutzerkontos erfolgt.

2. Verfahren nach Anspruch 1, **dadurch gekennzeichnet, dass** die Fernsteuerung und/oder Fernüberwachung mithilfe eines tragbaren Kommunikationsendgeräts als Kommunikationsgerät (4, 6) erfolgt.

3. Verfahren nach einem der vorhergehenden Ansprüche, **dadurch gekennzeichnet, dass** ein Benutzerkonto eines Benutzers (U1, U2) auch nach dem Beenden einer durchgeführten Fernsteuerung und/oder Fernüberwachung eines Haushaltsgeräts (9, 13) mit dem Kommunikationsgerät (4, 6) auf dem Internetserver (2) abgelegt bleibt.

4. Verfahren nach Anspruch 34, **dadurch gekennzeichnet, dass** bei einer zukünftigen weiteren gewollten Fernsteuerung und/oder Fernüberwachung eines Haushaltsgeräts (9, 13) mit dem Kommunikationsgerät (4, 6) durch einen Benutzer (U1, U2) eine Berechtigungsprüfung des Benutzers (U1, U2) anhand des abgelegten Benutzerprofils durchgeführt wird.

5. Verfahren nach einem der vorhergehenden Ansprüche, **dadurch gekennzeichnet, dass** bei der Fernsteuerung und/oder Fernüberwachung durch das Kommunikationsgerät (4, 6) überprüft wird, ob das Kommunikationsgerät (4, 6) ein Netzwerksignal eines Routers (10, 14) des Heimnetzwerks (11, 15) empfängt, und:
- falls das Kommunikationsgerät (4, 6) das Netzwerksignal empfängt, die Fernsteuerung und/oder Fernüberwachung alleine über das Heimnetzwerk (11, 15) durchgeführt wird, und
- falls das Kommunikationsgerät (4, 6) kein Netzwerksignal empfängt, die Fernsteuerung und/oder Fernüberwachung unter Vermittlung des Internetservers (2) über das Internet durchgeführt wird.

6. System (1) zur Fernsteuerung und/oder Fernüberwachung des Betriebs eines an ein lokales Heimnetzwerk (11, 15) angebundenen Haushaltsgeräts (9, 13), mit einem Kommunikationsgerät (4, 6) und einem Internetserver (2), welche zur Kommunikation miteinander ausgebildet sind, wobei auf dem Internetserver (2) ein erstes Benutzerkonto eines ersten Benutzers (U1, U2) des Kommunikationsgeräts (4, 6) bereitgestellt ist, auf welchem Daten bezüglich des Haushaltsgeräts (9, 13) abgelegt sind, und wobei das Kommunikationsgerät (4, 6) dazu ausgelegt ist, die Fernsteuerung und/oder Fernüberwachung des Haushaltsgeräts (9, 13) unter Zugriff auf die Daten des ersten Benutzerkontos und unter Vermittlung des lokalen Heimnetzwerks (11, 15) durchzuführen, wobei auf dem Internetserver (2) ein von dem einen ersten Benutzerkonto separates weiteres Benutzerkonto eines anderen Benutzers (U1, U2) bereitgestellt ist, **dadurch gekennzeichnet, dass** der Internetserver (2) dazu eingerichtet ist, die Daten bezüglich des Haushaltsgeräts (9, 13) auf dem weiteren Benutzerkonto unter der Voraussetzung abzulegen, dass der Internetserver (2) eine Zustimmungsnachricht des ersten Benutzers (U1, U2) empfängt, welche unter Zugriff auf das erste Benutzerkonto generiert wird, sodass die Fernsteuerung und/oder Fernüberwachung dieses Haushaltsgeräts (9, 13) wahlweise unter Zugriff auf das erste oder das weitere Benutzerkonto durchführbar ist, wobei das System derartig eingerichtet ist, dass der erste Benutzer vom ersten Benutzerkonto aus eine Registrierung des Haushaltsgeräts auf dem weiteren Benutzerkonto verwalten und/oder löschen kann, wobei auf dem ersten und/oder dem weiteren Benutzerkonto zusätzlich Daten bezüglich eines weiteren Haushaltsgeräts (9, 13), welches an ein von dem einen Heimnetzwerk (11, 15) separates weiteres Heimnetzwerk (11, 15) angeschlossen ist, abgelegt sind, und das System dafür eingerichtet ist, die Fernsteuerung und/oder Fernüberwachung des Betriebs des weiteren Haushaltsgeräts (9, 13) unter Zugriff auf die Daten desselben Benutzerkontos zu ermöglichen.

## Claims

1. Method for remote control and/or remote monitoring of the operation of a household appliance (9, 13) with the aid of a communication device (4, 6) of a user (U1, U2), wherein the household appliance (9, 13) is connected to a local home network (11, 15) and the communication device (4, 6) communicates with an internet server (2) on which a first user account of a first user (U1) is managed, in which data relating to the household appliance (9, 13) is stored, and wherein the remote control and/or remote monitoring of the household appliance (9, 13) is effected by the communication device (4, 6) by accessing the data of the first user account and through the agency of the local home network (11, 15), wherein a further user account of another user (U1, U2) separate from the first user account is managed on the internet server (2), wherein data relating to one and the same household appliance (9, 13) is stored both in the first and in the further user account, such that the remote control and/or remote monitoring of said household appliance (9, 13) is optionally performed by accessing the first or the further user account, wherein the data relating to the household appliance (9, 13) is initially stored in the first user account and the data relating to said household appliance (9, 13) is stored in the further user account on condition that the internet server (2) receives a consent message from the first user (U1, U2) which is generated by accessing the first user account, wherein from the first user account the first user can administer and/or delete a registration of the household appliance in the further user account,
**characterised in that**
data relating to a further household appliance (9, 13) which is connected to a further home network (11, 15) separate from the first home network (11, 15) is additionally stored in the first and/or the further user account, and that the remote control and/or remote monitoring of the operation of the further household appliance (9, 13) is also effected by accessing the data of the same user account.

2. Method according to claim 1, **characterised in that** the remote control and/or remote monitoring is effected with the help of a mobile communication terminal as a communication device (4, 6).

3. Method according to one of the preceding claims, **characterised in that** a user account of a user (U1, U2) remains stored on the internet server (2) even after termination of the performance of remote control and/or remote monitoring of a household appliance (9, 13) using the communication device (4, 6).

4. Method according to claim 3, **characterised in that** in the event of future further desired remote control and/or remote monitoring of a household appliance (9, 13) using the communication device (4, 6) by a user (U1, U2) an authorisation check on the user (U1, U2) is performed on the basis of the stored user profile.

5. Method according to one of the preceding claims, **characterised in that** in the event of remote control and/or remote monitoring by the communication device (4, 6) a check is made as to whether the communication device (4, 6) receives a network signal of a router (10, 14) of the home network (11, 15) and:
- if the communication device (4, 6) receives the network signal, the remote control and/or remote monitoring is performed only via the home network (11, 15), and
- if the communication device (4, 6) does not receive a network signal, the remote control and/or remote monitoring is performed via the internet through the agency of the internet server (2).

6. System (1) for the remote control and/or remote monitoring of the operation of a household appliance (9, 13) connected to a local home network (11, 15), having a communication device (4, 6) and an internet server (2) which are designed for communication with one another, wherein a first user account of a first user (U1, U2) of the communication device (4, 6) is provided on the internet server (2), in which data relating to the household appliance (9, 13) is stored, and wherein the communication device (4, 6) is designed to perform the remote control and/or remote monitoring of the household appliance (9, 13) by accessing the data of the first user account and through the agency of the local home network (11, 15), wherein a further user account of another user (U1, U2) separate from the first user account is provided on the internet server (2), **characterised in that** the internet server (2) is designed to store the data relating to the household appliance (9, 13) in the further user account on condition that the internet server (2) receives a consent message from the first user (U1, U2) which is generated by accessing the first user account, such that the remote control and/or remote monitoring of said household appliance (9, 13) can optionally be performed by accessing the first or the further user account, wherein the system is designed such that from the first user account the first user can administer and/or delete a registration of the household appliance in the further user account, wherein data relating to a further household appliance (9, 13) which is connected to a further home network (11, 15) separate from the first home network (11, 15) is additionally stored in the first and/or the further user account, and the system is designed for enabling the remote control and/or remote monitoring of the operation of the further household appliance (9, 13) by accessing the data of the same user account.

## Revendications

1. Procédé de télécommande et/ou de télésurveillance du fonctionnement d'un appareil ménager (9, 13) à l'aide d'un appareil de communication (4, 6) d'un utilisateur (U1, U2), dans lequel l'appareil ménager (9, 13) est rattaché à un réseau domestique (11, 15) local et l'appareil de communication (4, 6) communique avec un serveur Internet (2) sur lequel un compte utilisateur d'un premier utilisateur (U1) est géré, sur lequel compte des données se rapportant à l'appareil ménager (9, 13) sont stockées en mémoire, et dans lequel la télécommande et/ou la télésurveillance de l'appareil ménager (9, 13) s'effectuent par l'intermédiaire de l'appareil de communication (4, 6) en accédant aux données du premier compte utilisateur et via le réseau domestique local (11, 15), et dans lequel un autre compte utilisateur d'un autre utilisateur (U1, U2) distinct du premier compte utilisateur est géré sur le serveur Internet (2), et des données se rapportant à un seul et même appareil ménager (9, 13) sont stockées en mémoire sur le premier et sur l'autre compte utilisateur, de telle manière que la télécommande et/ou la télésurveillance de cet appareil ménager (9, 13) est exécutée au choix en accédant au premier ou à l'autre compte utilisateur, et
dans lequel les données se rapportant à l'appareil ménager (9, 13) sont d'abord stockées en mémoire sur le premier compte utilisateur et la mise en mémoire des données se rapportant à cet appareil ménager (9, 13) est effectuée sur l'autre compte utilisateur sous réserve que le serveur Internet (2) reçoive un message d'approbation du premier utilisateur (U1, U2) généré en accédant au premier compte utilisateur,
dans lequel le premier utilisateur peut gérer et/ou supprimer à partir du premier compte utilisateur un enregistrement de l'appareil ménager constitué sur l'autre compte utilisateur,
**caractérisé en ce**
**qu'**en outre, des données concernant un autre appareil ménager (9, 13) connecté à un autre réseau domestique (11, 15) distinct du un réseau domestique (11, 15) sont stockées en mémoire sur le premier et/ou sur l'autre compte utilisateur, et en ce que la télécommande et/ou télésurveillance du fonctionnement de l'autre appareil ménager (9, 13) s'effectuent également en accédant aux données du même compte utilisateur.

2. Procédé selon la revendication 1, **caractérisé en ce que** la télécommande et/ou la télésurveillance s'effectue à l'aide d'un appareil de communication portable au titre d'appareil de communication (4, 6).

3. Procédé selon l'une des revendications précédentes, **caractérisé en ce qu'**un compte utilisateur d'un utilisateur (U1, U2) reste stocké en mémoire sur le serveur Internet (2) même après l'achèvement d'une télécommande et/ou télésurveillance d'un appareil ménager (9, 13) exécutée avec l'appareil de communication (4, 6).

4. Procédé selon la revendication 3, **caractérisé en ce que**, lors d'une future télécommande et/ou télésurveillance voulue d'un appareil ménager (9,13) avec l'appareil de communication (4, 6) par un utilisateur (U1, U2), un contrôle d'autorisation de l'utilisateur (U1, U2) est effectué en se basant sur le profil de l'utilisateur enregistré.

5. Procédé selon l'une des revendications précédentes, **caractérisé en ce que**, lors de la télécommande et/ou de la télésurveillance par l'appareil de communication (4, 6), il est vérifié si l'appareil de communication (4, 6) reçoit un signal de réseau d'un routeur (10, 14) du réseau domestique (11, 15), et :
- dans le cas où l'appareil de communication (4, 6) reçoit le signal de réseau, la télécommande et/ou la télésurveillance est exécutée uniquement par l'intermédiaire du réseau domestique (11, 15), et
- dans le cas où l'appareil de communication (4, 6) ne reçoit aucun signal de réseau, la télécommande et/ou la télésurveillance est exécutée par l'intermédiaire du serveur Internet (2) via Internet.

6. Système (1) de télécommande et/ou de télésurveillance du fonctionnement d'un appareil ménager rattaché à un réseau domestique local (11, 15) avec un appareil de communication (4, 6) et un serveur Internet (2) configurés en communication l'un avec l'autre, dans lequel un premier compte utilisateur d'un premier utilisateur (U1, U2) de l'appareil de communication (4, 6) est constitué sur le serveur Internet (2), sur lequel des données concernant l'appareil ménager (9, 13) sont stockées en mémoire, et dans lequel l'appareil de communication (4, 6) est conçu de manière à exécuter la télécommande et/ou la télésurveillance de l'appareil ménager (9, 13) lors d'un accès aux données du premier compte utilisateur et via le réseau domestique local (11, 15), et dans lequel un autre compte utilisateur d'un autre utilisateur (U1, U2) distinct du premier compte utilisateur est constitué sur le serveur Internet (2) et le serveur Internet (2) est configuré de manière à stocker en mémoire les données se rapportant à l'appareil ménager (9, 13) sur l'autre compte utilisateur sous réserve que le serveur Internet (2) reçoive un message d'approbation du premier utilisateur (U1, U2), généré en accédant au premier compte utilisateur, de telle manière que la télécommande et/ou la télésurveillance de cet appareil ménager (9, 13) peut être exécutée au choix en accédant au premier ou à l'autre compte utilisateur, dans lequel le système est configuré de telle sorte que le premier utilisateur peut gérer et/ou supprimer à partir du premier compte utilisateur un enregistrement de l'appareil ménager constitué sur l'autre compte utilisateur, dans lequel des données concernant un autre appareil ménager (9, 13) connecté à un autre réseau domestique (11, 15) distinct du un réseau domestique (11, 15) sont stockées en mémoire sur le premier et/ou sur l'autre compte utilisateur, et en ce que la télécommande et/ou télésurveillance du fonctionnement de l'autre appareil ménager (9, 13) s'effectuent également en accédant aux données du même compte utilisateur.
